# EUROPÄISCHE PATENTSCHRIFT

(11) **EP 3 421 567 B1**
(45) Veröffentlichungstag und Bekanntmachung des Hinweises auf die Patenterteilung: **18.09.2024**
(21) Anmeldenummer: 17178404.4
(22) Anmeldetag: 28.06.2017
(51) Int. Cl.: C09J 163/00, C08G 59/00, C09J 5/06

(54) **UV VORHÄRTBARE EPOXID-ZUSAMMENSETZUNG FÜR ZWEISTUFIGEN MONTAGEPROZESS**
UV PRE-CURABLE EPOXIDE COMPOSITION FOR TWO STAGE PROCESS OF ASSEMBLY
COMPOSITION ÉPOXYDE PRÉ-DURCISSABLE AUX UV POUR PROCESSUS DE MONTAGE EN DEUX PHASES

(43) Veröffentlichungstag der Anmeldung: 02.01.2019
(73) Patentinhaber: Henkel AG & Co. KGaA, 40589 Düsseldorf (DE)
(72) Erfinder: FOURCADE, Damien, 68161 Mannheim (DE); HORNUNG, Martin, 69245 Bammental (DE)

(56) Entgegenhaltungen:
- WO-A1-2007/036524
- WO-A1-2015/132372
- JP-B2- 5 296 575
- JP-B2- 5 495 906
- US-A1- 2007 034 515
- Datenblatt Aron Oxetane OXT-101 von TOAGOSEI Co. Ltd.

## Beschreibung

Die vorliegende Erfindung betrifft Klebstoffzusammensetzungen enthaltend mindestens ein aromatisches Epoxidharz, mindestens eine Verbindung mit mindestens einer Oxetan-Gruppe und mindestens einen Photoinitiator, ein Verfahren zur Verklebung von mindestens zwei Bauteilen sowie die Verwendung entsprechender Klebstoffzusammensetzungen.

In der Automobilindustrie aber auch auf anderen Gebieten sind Klebstoffe auf Epoxidharzbasis weit verbreitet und werden beispielsweise dazu verwendet, Bauteile, die aus demselben oder ähnlichen Materialien sind, miteinander zu verkleben. Epoxidklebstoffe werden auch für den Siebdruck verwendet, wobei der Siebdruck ein besonders geeignetes Verfahren zum Verkleben von zwei Bauteilen im Automobilbereich ist. Mittels des Siebdruckverfahrens lässt sich der Klebstoff sehr präzise auf die Bauteile auftragen, sowohl hinsichtlich der benötigten Dicke als des genauen Ortes. Allerdings weisen die bekannten Klebstoffe häufig den Nachteil auf, dass diese nach dem Auftrag eine zu geringe Viskosität aufweisen. Diese niederviskosen Klebstoffe können dann nach dem Auftrag verlaufen oder werden beim Zusammenfügen der Bauteile aus der Fügungszone herausgedrückt bzw. herausgequetscht, was zu einer mangelhaften Verklebung und Fehlerstellen führt.

Klebstoffe, die von Anfang an eine hohe Viskosität aufweisen, so dass diese nach dem Auftragen nicht verlaufen oder herausgedrückt würden, haben den Nachteil, dass diese schwerer zu handhaben sind und eventuell nicht mit dem Siebdruckverfahren aufgetragen werden können. Andere Klebstoffe können zwar nach dem Auftragen mittels UV-Strahlung vorgehärtet werden, bevor diese thermisch ausgehärtet werden. Dadurch wird zwar ein unmittelbares verlaufen nach dem Auftragen unterdrückt, aber trotzdem werden diese Klebstoffe beim Fügen, insbesondere unter Druck, aus der Fügezone herausgequetscht, da infolge der Temperaturerhöhung für die thermische Härtung die Viskosität dieser Klebstoffe stark abfällt.

UV-härtende Klebstoffzusammensetzungen auf Basis von Epoxiden sind aus WO2007/036524 A1 bekannt.

Es besteht daher nach wie vor Bedarf an Klebstoffen auf Epoxidharzbasis, die die genannten Nachteile überwinden. Insbesondere bestand die Aufgabe darin eine Klebstoffzusammensetzung bereitzustellen, die leicht zu handhaben ist, insbesondere im Siebdruckverfahren einsetzbar ist, die hohen Anforderungen hinsichtlich der Klebeeigenschaften im Automobilbereich erfüllt und die beim Verkleben keine zu geringe Viskosität aufweist, dass diese aus der Klebezone herausgedrückt werden kann.

Die Aufgabe wird in überraschender Weise durch die anspruchsgemäße Klebstoffzusammensetzung gelöst. In einem ersten Aspekt betrifft die vorliegende Erfindung daher eine Klebstoffzusammensetzung umfassend
(a) mindestens 50 Gew.-% mindestens eines aromatischen Epoxidharzes;
(b) mindestens eine Verbindung mit mindestens einer Oxetan-Gruppe; und
(c) mindestens einen Photoinitiator, dadurch gekennzeichnet, dass die mindestens eine Verbindung mit mindestens einer Oxetan-Gruppe genau eine Oxetan-Gruppe pro Molekül aufweist und/ oder die mindestens eine Verbindung mit mindestens einer Oxetan-Gruppe zusätzlich mindestens eine Hydroxylgruppe hat.

Insbesondere wird die Aufgabe in überraschender Weise durch ein Verfahren zum Verkleben gelöst, wobei nach dem Auftragen der genannten Klebstoffzusammensetzung auf ein erstes zu verklebendes Substrat die Klebstoffzusammensetzung mit Strahlung vorgehärtet wir, anschließend wird das Substrat mit einem zweiten Substrat gefügt und thermisch gehärtet.

Die erfindungsgemäßen Klebstoffzusammensetzungen sind sowohl leicht zu handhaben, insbesondere im Siebdruckverfahren, als auch erfüllen diese die hohen Anforderungen hinsichtlich der Klebeeigenschaften im Automobilbereich. Durch die Verwendung mindestens einer Verbindung mit mindestens einer Oxetan-Gruppe kann erreicht werden, dass die Viskosität der Klebstoffzusammensetzung beim Erwärmen für die thermische Härtung nicht abfällt, wodurch das "Herausquetschen" der Klebstoffzusammensetzung minimiert bzw. gänzlich verhindert werden kann. "Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen KlebstoffZusammensetzungen bezieht sich diese Angabe nicht auf die absolute Menge an Molekülen sondern auf die Art des Bestandteils. "Mindestens ein Epoxidharz" bedeutet daher beispielsweise ein oder mehrere verschiedene Epoxidharze, d.h. eine oder mehrere verschiedene Arten von Epoxidharzen. Zusammen mit Mengenangaben beziehen sich die Mengenangaben auf die Gesamtmenge der entsprechend bezeichneten Art von Bestandteil, wie bereits oben definiert.

"Ungefähr", wie hierin im Zusammenhang mit Zahlenwerten verwendet, bezieht sich auf den referenzierten Zahlenwert ±10%, vorzugsweise ±5%.

Sofern hierin auf Molekulargewichte von polymeren Verbindungen Bezug genommen wird, beziehen sich die Angaben auf das zahlenmittlere Molekulargewicht Mₙ, sofern nicht anders angegeben. Das Molekulargewicht kann mittels GPC gegen einen Polystyrolstandard bestimmt werden.

Die Klebstoffzusammensetzung enthält mindestens ein aromatisches Epoxidharz. Typischerweise haben die Epoxidgruppen-haltige Harze bzw. Epoxidharze (im Mittel) mit mindestens 2 Epoxidgruppen pro Molekül, bevorzugt 2 bis 10 Epoxidgruppen pro Molekül. "Epoxidgruppen", wie hierin verwendet, bezieht sich auf 1,2-Epoxidgruppen (Oxirane).

Beispiele für geeignete Harze schließen ein, ohne darauf beschränkt zu sein, (Poly)Glycidylether, die üblicherweise durch Umsetzung von Epichlorhydrin oder Epibromhydrin mit aromatischen Polyphenolen in Gegenwart von Alkali erhalten werden oder auch (Poly)Glycidylether von Phenol-Formaldehyd-Novolak-Harzen, alkylsubstituierte Phenol-Formaldehydharze (Epoxy-Novolak-Harze), Phenol-Hydroxybenzaldehyd-Harze, Cresol-Hydroxybenzaldehyd-Harze, Dicyclopentadien-Phenol-Harze und Dicyclopentadien-substituierte Phenol-Harze. Für diesen Zweck geeignete Polyphenole sind beispielsweise Resorcin, Brenzkatechin, Hydrochinon, Bisphenol A (2,2-Bis(4-hydroxyphenyl)propan), Bisphenol F (Bis(4-hydroxyphenyl)methan), 1,1-Bis(4-hydroxyphenyl)isobutan, 4,4-Dihydroxybenzophenon, 1,1-Bis(4-hydroxyphenyl)ethan und 1,5-Hydroxynaphthalin. Ebenfalls geeignet sind Diglycidylether von ethoxyliertem Resorcin (DGER), Diglcydidylether von Resorcin, Brenzkatechin, Hydrochinon, Bisphenol, Bisphenol A, Bisphenol AP (1,1-Bis(4-hydroxyphenyl)-1-Phenylethan), Bisphenol F, Bisphenol K, Bisphenol S, und Tetramethylbiphenol.

Bevorzugt weist das mindestens eine aromatische Epoxidharz ein Epoxid-Äquivalent zwischen 130 und 1000 g/mol Äquivalent, insbesondere zwischen 140 und 500 g/mol Äquivalent, vorzugsweise zwischen 150 und 250 g/mol Äquivalent auf. Das Epoxid-Äquivalent kann gemäß der DIN 16945 bestimmt werden.

Besonders bevorzugt enthält die Zusammensetzung mindestens ein bei 25°C flüssiges aromatisches Epoxidharz. Vorzugsweise ist mindestens ein bei 25°C flüssiges aromatisches Epoxidharz enthalten, das eine Viskosität bei 25°C von kleiner 10 Pas, insbesondere von 0,01 bis 10 Pas, bevorzugt von 0,1 bis 7 Pas, besonders bevorzugt von 1 bis 5 Pas aufweist. Die Viskosität kann gemäß DIN 53105 bestimmt werden. Besonders bevorzugt sind flüssige Epoxidharze, die durch Umsetzen von Bisphenol A oder Bisphenol F oder Mischungen davon, insbesondere Mischungen von Bisphenol A und Bisphenol F, und Epichlorhydrin erhalten werden.

Insbesondere kann die Zusammensetzung zusätzlich zum flüssigen aromatischen Epoxidharz mindestens ein aromatisches Epoxidharz enthalten, das eine Viskosität bei 50°C von größer 10 Pas, insbesondere von 10 bis 200 Pas, bevorzugt von 20 bis 100 Pas aufweist. Die Viskosität kann gemäß DIN 53105 bestimmt werden. Besonders bevorzugt sind diese Epoxidharze Polyglycidylether von Novolak-Harzen. Novolak-Harze sind Kondensate von Phenolen bzw. Phenol-Derivaten mit Formaldehyd. Besonders bevorzugt sind diese Epoxidaharze Polyglycidylether von Phenol-Novolak und/oder Cresol-Novolak, insbesondere Phenol-Formaldehyd-Harze (Phenol-Novolak).

Vorzugsweise enthält die Klebstoffzusammensetzung mindestens ein Epoxidharz ausgewählt aus Epoxidharzen basierend auf Bisphenol oder Epoxidharzen basierend auf Novolak-Harzen, insbesondere Phenol-Formaldehyd-Harzen, oder aus Mischungen davon. In einer bevorzugten Ausführungsform enthält die Klebstoffzusammensetzung mindestens ein Epoxidharz, das durch Umsetzen von Bisphenol A oder Bisphenol F oder Mischungen davon, insbesondere Mischungen von Bisphenol A und Bisphenol F, und Epichlorhydrin erhalten wird. In einer anderen bevorzugten Ausführungsform enthält die Klebstoffzusammensetzung mindestens ein Epoxidharz, das ein Polyglycidylether von Novolak-Harzen, insbesondere von Phenol-Novolak und/oder Cresol-Novolak, vorzugsweise Phenol-Formaldehyd-Harzen ist. In einer besonders bevorzugten Ausführungsform enthält die Klebstoffzusammensetzung mindestens zwei unterschiedlichen Epoxidharzen, vorzugsweise eine Mischung von mindestens einem Epoxidharzen basierend auf Bisphenol, insbesondere Bisphenol A oder Bisphenol F oder Mischungen davon, und einem Epoxidharz basierend auf Novolak-Harzen, insbesondere Phenol-Formaldehyd-Harzen.

Der Anteil des mindestens einen aromatischen Epoxidharzes bzw. aller enthaltenden aromatischen Epoxidharze an der gesamten Klebstoffzusammensetzung ist mindestens 50 Gew.-%, vorzugsweise 50 bis 98 Gew.-%, insbesondere 60 bis 97 Gew.-%, besonders bevorzugt 70 bis 95 Gew.-%.

Bevorzugt enthält die Klebstoffzusammensetzung mindestens 30 Gew.-%, vorzugsweise 40 bis 80 Gew.-%, insbesondere 50 bis 70 Gew.-%, jeweils bezogen auf die gesamte Klebstoffzusammensetzung, von mindestens einem Epoxidharz basierend auf Bisphenol, insbesondere Bisphenol A oder Bisphenol F oder Mischungen davon.

Bevorzugt enthält die Klebstoffzusammensetzung mindestens 10 Gew.-%, vorzugsweise 10 bis 50 Gew.-%, insbesondere 20 bis 40 Gew.-%, jeweils bezogen auf die gesamte Klebstoffzusammensetzung, von mindestens einem Epoxidharz basierend auf Novolak-Harzen, insbesondere Phenol-Formaldehyd-Harzen.

Besonders bevorzugt enthält die Klebstoffzusammensetzung mindestens 30 Gew.-%, vorzugsweise 40 bis 80 Gew.-%, insbesondere 50 bis 70 Gew.-%, jeweils bezogen auf die gesamte Klebstoffzusammensetzung, von mindestens einem Epoxidharz basierend auf Bisphenol, insbesondere Bisphenol A oder Bisphenol F oder Mischungen davon, und mindestens 10 Gew.-%, vorzugsweise 10 bis 50 Gew.-%, insbesondere 20 bis 40 Gew.-%, jeweils bezogen auf die gesamte Klebstoffzusammensetzung, von mindestens einem Epoxidharz basierend auf Novolak-Harzen, insbesondere Phenol-Formaldehyd-Harzen.

Neben dem aromatischen Epoxidharz enthält die Klebstoffzusammensetzung mindestens eine Verbindung mit mindestens einer Oxetan-Gruppe, vorzugsweise 1 bis 4, insbesondere 1 bis 2, besonders bevorzugt genau eine Oxetan-Gruppe pro Molekül. "Oxetan-Gruppe", wie hierin verwendet, bezieht sich auf einen Vierring mit einem Sauerstoffatom. Neben der Oxetan-Gruppe können diese Verbindungen auch mindestens eine Hydroxylgruppe, vorzugsweise 1 bis 4, insbesondere 1 bis 2, besonders bevorzugt genau eine Hydroxylgruppe pro Molekül aufweisen.

Vorzugsweise handelt es sich bei der Verbindung mit mindestens einer Oxetan-Gruppe, insbesondere genau einer Oxetan-Gruppe um monomere Verbindungen.

Vorzugsweise weist die mindestens eine Verbindung mit mindestens einer Oxetan-Gruppe, insbesondere auch mit einer Hydroxylgruppe, ein Molekulargewicht von weniger als 1000 g/mol auf, vorzugsweise von weniger als 500 g/mol, bevorzugt von weniger als 300 g/mol. Insbesondere weist die mindestens eine Verbindung mit mindestens einer Oxetan-Gruppe, insbesondere auch mit einer Hydroxylgruppe, ein Molekulargewicht von 70 bis 1000 g/mol, vorzugsweise 100 bis 500 g/mol, bevorzugt 120 bis 200 g/mol.

Besonders bevorzugt enthält die Klebstoffzusammensetzung mindestens eine Verbindung mit einer Oxetan-Gruppe gemäß der Formel (I): 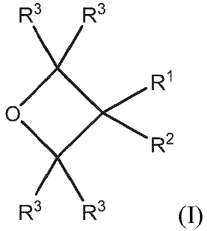 worin
R¹ für Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht, und
R² und R³ unabhängig voneinander jeweils für Wasserstoff, Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht.

Ganz besonders bevorzugt enthält die Klebstoffzusammensetzung als mindestens eine Verbindung mit einer Oxetan-Gruppe und mindestens einer Hydroxylgruppe ein Hydroxyoxetan gemäß der oben genannten Formel (I), worin
R¹ für Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht,
R² für Hydroxyalkyl, Hydroxyalkoxy, Hydroxyalkoxyalkyl, Hydroxyaryl oder Hydroxyaryloxy steht, und
R³ unabhängig voneinander jeweils für Wasserstoff, Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht.

Bevorzugt ist das mindestens eine Hydroxyoxetan der Formel (I)
ein 3-Alkyl-3-(hydroxyalkyl)oxetan [d.h. R¹ = Alkyl, R² = Hydroxyalkyl, alle R³ = H],
ein 3,3-Di(hydroxyalkyl)oxetan [d.h. R¹, R² = Hydroxyalkyl, alle R³ = H],
ein 3-Alkyl-3-(hydroxyalkoxy)oxetan [d.h. R¹ = Alkyl, R² = Hydroxyalkoxy, alle R³ = H],
ein 3-Alkyl-3-(hydroxyalkoxyalkyl)oxetan [d.h. R¹ = Alkyl, R² = Hydroxyalkoxyalkyl, alle R³ = H], oder ein Gemisch dieser Hydroxyoxetane,
besonders bevorzugt ein 3-Alkyl-3-(hydroxyalkyl)oxetan [d.h. R¹= Alkyl, R² = Hydroxyalkyl, alle R³ = H] und/oder ein 3-Alkyl-3-(hydroxyalkoxy)oxetan [d.h. R¹ = Alkyl, R² = Hydroxyalkoxy, alle R³ = H].

Der Ausdruck "Alkyl" steht hier vorzugsweise für lineare oder verzweigte Alkylreste mit 1 bis 24 C-Atomen, beispielsweise mit 1 bis 12 oder mit 1 bis 8 C-Atomen. Besonders bevorzugt steht der Ausdruck "Alkyl" für Methyl oder Ethyl.

Der Ausdruck "Alkoxy" steht hier vorzugsweise für Methoxy, Ethoxy, Propoxy, Butoxy, Phenylethoxy, besonders bevorzugt Ethoxy und/oder Propoxy, und umfasst bis zu 20 Alkoxyeinheiten oder eine Kombination von zwei oder mehr AlkoxyEinheiten, die statistisch, blockweise oder gradientenartig angeordnet sein können.

Besonders bevorzugt wird als Hydroxyoxetan mindestens ein Hydroxyoxetan ausgewählt aus der Gruppe bestehend aus 3-Methyl-3-(hydroxymethyl)oxetan, 3-Ethyl-3-(hydroxymethyl)oxetan, 3,3-Di(hydroxymethyl)oxetan (Trimethylolpropanoxetan; TMPO) verwendet. Es können auch Mischungen dieser Verbindungen eingesetzt werden. Ganz besonders bevorzugt enthält die Klebstoffzusammensetzung Trimethylolpropanoxetan als die mindestens eine Verbindung mit mindestens einer Oxetan-Gruppe.

Vorzugsweise enthält die Klebstoffzusammensetzung 1 bis 20 Gew.-%, vorzugsweise 2 bis 15 Gew.-%, insbesondere 5 bis 10 Gew.-%, jeweils bezogen auf die gesamte Klebstoffzusammensetzung, der mindestens einen Verbindung mit mindestens einer Oxetan-Gruppe, insbesondere auch mit einer Hydroxylgruppe.

Die hierin beschriebenen Klebstoffzusammensetzung können durch eine durch Licht initiierte Polymerisationsreaktion vorgehärtet werden. Dabei werden die Zusammensetzungen kationisch mit Hilfe eines kationischen Photoinitiators, der bei der Absorption einer bestimmten Lichtwellenlänge Kationen bildet, polymerisiert.

Der kationische Photoinitiator kann einer der üblicherweise für die kationische Polymerisation verwendeten sein. Beispiele schließen Oniumsalze mit Anionen niedriger Nukleophilität ein, wie z.B. Haloniumsalze, lodoniumsalze, Sulfoniumsalze, Sulfoxoniumsalze oder Diazoniumsalze. Geeignete Anionen schließen beispielsweise Hexafluoroantimonat, Hexafluorophosphat oder Tetrakis-(pentafluorophenyl)borat ein. Bevorzugt sind Sulfonium- und lodoniumsalzen, wobei das Gegenion ausgewählt wird aus Hexafluoroantimonat, Hexafluorophosphat und (Tetrakis-(pentafluoroaryl))boraten, insbesondere Triarylsulfonium- und Bis(alkylphenyl)iodoniumsalze mit Hexafluoroantimonat als Gegenion, besonders bevorzugt Triarylsulfoniumhexafluoroantimonatsalze.

Vorzugsweise enthält die Klebstoffzusammensetzung 0,1 bis 5 Gew.-%, vorzugsweise 0,5 bis 3 Gew.-%, insbesondere 1 bis 2 Gew.-%, jeweils bezogen auf die gesamte Klebstoffzusammensetzung, des mindestens eines Photoinitiators.

Optional können die erfindungsgemäßen Klebstoffzusammensetzungen als weitere Komponente auch Reaktivverdünner zum Einstellen des Fließverhaltens enthalten. Reaktivverdünner sind im Sinne dieser Erfindung Hydroxyl- oder Epoxid-Gruppen enthaltende, niederviskose Substanzen mit aliphatischer oder aromatischer Struktur, insbesondere Epoxid-Gruppen enthaltende Verbindungen. Typische Beispiele für Reaktivverdünner sind Monoglycidylether von C6- bis C14-Monoalkoholen oder Alkylphenolen sowie die Monoglycidylether des Cashewnuss-Schalenöls, Mono- oder Diglycidylether des Ethylenglycols, Diethylenglycols, Triethylenglycols, Tetraethylenglycols, Propylenglycols, Dipropylenglycols, Tripropylenglycols, Tetrapropylenglycols, Neopentylenglycols, 1,4-Butylenglycols, 1,5-Pentandiols, 1,6-Hexandiols, Cyclohexandimethanols, Triglycidylether des Trimethylolpropans sowie die Glycidylester von C6- bis C24- Carbonsäuren oder deren Mischungen. Insbesondere bevorzugt sind Reaktivverdünner mit einer Epoxid-Gruppe, bevorzugt sind Monoglycidylether von C6- bis C14-Monoalkoholen oder Alkylphenolen. Die Reaktivverdünner mit einer Epoxid-Gruppe unterscheiden sich von den aromatischen Epoxidharzen und zählen auch nicht zu diesen.

In einer bevorzugten Ausführungsform enthält die Klebstoffzusammensetzung bis zu 20 Gew.-%, vorzugsweise 1 bis 15 Gew.-%, insbesondere 2 bis 10 Gew.-%, jeweils bezogen auf die gesamte Klebstoffzusammensetzung, des mindestens einen Reaktivverdünners, vorzugsweise eines Monoglycidylethers von C6- bis C14-Monoalkoholen oder Alkylphenolen.

Die Klebstoffzusammensetzungen der Erfindung können ferner prinzipiell alle im Stand der Technik bekannten und üblichen zusätzlichen Bestandteile enthalten. Derartige zusätzlichen Bestandteile schließen ein, ohne darauf beschränkt zu sein, Haftvermittler, Füllstoffe, Weichmacher, Verdünnungsmittel, Fließmittel, Kopplungsmittel, Benetzungsmittel, Flammschutzmittel, Mitte zur Kontrolle der Viskosität, Konservierungsmittel, Stabilisatoren, Entschäumungsmittel und Farbstoffe. Dabei sollten die zusätzlichen Bestandteile vorzugsweise nicht UV-absorbierend sein. Bevorzugt sind die Additive in einer Menge von weniger als 10 Gew.-%, insbesondere weniger als 3 Gew.-%, bevorzugt weniger als 1 Gew.-%, jeweils bezogen auf die gesamte Klebstoffzusammensetzung, enthalten.

In einer bevorzugten Ausführungsform enthält die Klebstoffzusammensetzung
(a) mindestens 50 Gew.-%, vorzugsweise 50 bis 98 Gew.-%, insbesondere 60 bis 97 Gew.-%, besonders bevorzugt 70 bis 95 Gew.-% eines aromatisches Epoxidharzes;
(b) 1 bis 20 Gew.-%, vorzugsweise 2 bis 15 Gew.-%, insbesondere 5 bis 10 Gew.-%,mindestens eine Verbindung mit mindestens einer Oxetan-Gruppe, insbesondere auch mit einer Hydroxylgruppe, insbesondere eines Hydroxyoxetans;
(c) 0,1 bis 5 Gew.-%, vorzugsweise 0,5 bis 3 Gew.-%, insbesondere 1 bis 2 Gew.-% mindestens eines Photoinitiators; und
(d) optional bis zu 20 Gew.-%, vorzugsweise 1 bis 15 Gew.-%, insbesondere 2 bis 10 Gew.-% mindestens eines Reaktivverdünners, insbesondere mit genau einer Epoxidgruppe pro Molekül.

Die Gew.-%-Angaben beziehen sich, soweit nichts anders angegeben wurde, jeweils auf die gesamte Klebstoffzusammensetzung.

In einer weiter bevorzugten Ausführungsform enthält die Klebstoffzusammensetzung
(a) mindestens 50 Gew.-%, eines aromatisches Epoxidharzes; wobei
   (a1) mindestens 30 Gew.-%, vorzugsweise 40 bis 80 Gew.-%, insbesondere 50 bis 70 Gew.-%, von mindestens einem Epoxidharz basierend auf Bisphenol, insbesondere Bisphenol A oder Bisphenol F oder Mischungen davon, und
   (a2) mindestens 10 Gew.-%, vorzugsweise 10 bis 50 Gew.-%, insbesondere 20 bis 40 Gew.-% von mindestens einem Epoxidharz basierend auf Novolak-Harzen, insbesondere Phenol-Formaldehyd-Harzen enthalten sind;
(b) 1 bis 20 Gew.-%, vorzugsweise 2 bis 15 Gew.-%, insbesondere 5 bis 10 Gew.-%,mindestens eine Verbindung mit mindestens einer Oxetan-Gruppe, insbesondere auch mit einer Hydroxylgruppe, insbesondere eines Hydroxyoxetans;
(c) 0,1 bis 5 Gew.-%, vorzugsweise 0,5 bis 3 Gew.-%, insbesondere 1 bis 2 Gew.-% mindestens eines Photoinitiators; und
(d) optional bis zu 20 Gew.-%, vorzugsweise 1 bis 15 Gew.-%, insbesondere 2 bis 10 Gew.-% mindestens eines Reaktivverdünners, insbesondere mit genau einer Epoxidgruppe pro Molekül.

Ein weiterer Gegenstand der Erfindung ist ein Verfahren zum Verkleben, wobei nach dem Auftragen der genannten Klebstoffzusammensetzung auf ein erstes zu verklebendes Substrat die Klebstoffzusammensetzung mit Strahlung vorgehärtet wird, anschließend wird das Substrat mit einem zweiten Substrat gefügt und thermisch gehärtet. Insbesondere handelt es sich bei dem Verfahren um ein Siebdruckverfahren, da gerade mit dem Siebdruckverfahren einen hohe Präzision hinsichtlich des Auftragungsortes und der Auftragungsdicke erreicht werden kann, damit der Klebstoff in der richtigen Menge am richtigen Ort platziert wird. Dies spart Klebstoff, führt aber gleichzeitig zu einer optimalen Verklebung mit möglichst geringem Fehler.

In dem ersten Schritt wird die oben beschriebene Klebstoffzusammensetzung auf ein zu verklebendes Substrat aufgetragen, vorzugsweise erfolgt dieser Auftrag gemäß dem Siebdruckverfahren.

Die Epoxidharzklebstoffe der vorliegenden Erfindung können für eine Vielzahl von Materialien verwendet werden. Geeignete Materialien schließen ein, ohne darauf beschränkt zu sein, Metalle, wie Aluminium und Stahl, thermoplastische Polymere, wie Polyethylen, Polypropylen, Polyurethan, Polyacrylat und Polycarbonat sowie deren Copolymere, Thermoset Polymere, wie vulkanisierte Kautschuke, Harnstoff-Formaldehyd-Schäume, Melaminharze, Holz, Glas, graphitische Substrate, Kohlenstofffaserverbundstoffe (CFC), Glasfaserverbundstoffe (GFC) und andere Verbundstoffe. Die Epoxidharz-Klebstoffe können dazu verwendet werden identische, ähnliche oder verschiedene Materialien miteinander zu verkleben, wie Stahl und Stahl, Stahl und Aluminium, CFC und Stahl, CFC und Aluminium, Polycarbonat und Vulkanisationskautschuk, oder Aluminium und Holz

Vorzugsweise weist die Klebstoffzusammensetzung, d.h. die ungehärtete Klebstoffzusammensetzung vor dem Auftragen, eine Viskosität bei 25°C von kleiner 100 Pas, insbesondere von 0,01 bis 100 Pas, vorzugsweise von 0,1 bis 50 Pas, bevorzugt von 1 bis 20 Pas auf. Eine entsprechende Viskosität ist insbesondere für die Handhabung und einem optimalen Auftrag der Klebstoffzusammensetzung von Vorteil, insbesondere für das Siebdruckverfahren. Die Viskosität kann mittels Photorheologie bestimmt werden, wobei vorzugsweise eine Plate-Plate-Konfiguration mit d = 15mm, eine Abstand von 0,1 mm und eine Quecksilberlampe als UV-Quelle verwendet wird. Beispielsweise kann die Messung mit einem Anton Paar MCR 302 mit einer Omnicure S2000 Lampe gemessen werden.

Nach dem Auftragen wird die aufgetragene Klebstoffzusammensetzung mittels Strahlung, insbesondere mittels Licht, vorzugsweise mittels UV-Strahlung vorgehärtet. Durch diese Vorhärtung wird die zunächst typischerweise niederviskose Klebstoffzusammensetzung fixiert, bevor Sie nach dem Fügen mit dem zweiten zu verklebenden Substrat thermisch ausgehärtet wird. Die Vorhärtung der Zusammensetzung erfolgt typischerweise durch die mit Strahlung, wie Licht initiierte kationische Polymerisation. Bei dem Licht, das zum Starten der Polymerisationsreaktion eingesetzt wird handelt es sich vorzugsweise um kurzwelliges Licht, beispielsweise UV-Licht. Die Vorhärtung führt dabei nicht zu einer vollständigen Härtung. Die vollständige Aushärtung der Klebstoffzusammensetzung wird erst mittels der thermischen Härtung erreicht.

Die Vorhärtung erfolgt typischer Weise bei Temperaturen unterhalb von 50 °C, vorzugsweise bei Temperaturen zwischen 10 und 30 °C. Die Dauer der Bestrahlung zur Vorhärtung, insbesondere mit UV-Strahlung beträgt vorzugsweise 0,1 bis 300 Sekunden, bevorzugt 1 bis 100 Sekunden.

Nach der Vorhärtung weist die Klebstoffzusammensetzung vorzugsweise eine Viskosität bei 25 °C von größer 1000 Pas, insbesondere von 1000 bis 50000 Pas, vorzugsweise von 2000 bis 20000 Pas, bevorzugt von 3000 bis 10000 Pas auf. Eine entsprechende Viskosität ist insbesondere für das weitere Verfahren vorteilhaft, da dadurch verhindert wird, dass der Klebstoff verläuft oder beim Fügen unter Druck herausgequetscht wird. Zudem wäre so eine Lagerung an dieser Stelle des Verfahrens möglich.

Nach der Vorhärtung wird das erste Substrat mit dem zweiten Substrat gefügt und thermisch gehärtet. Die thermische Härtung erfolgt typischerweise bei Temperaturen oberhalb von 50 °C, vorzugsweise zwischen 50 und 200 °C, insbesondere zwischen 70 und 150 °C, bevorzugt zwischen 80 und 120°C. Das Fügen und die anschließende thermische Härtung erfolgt vorzugsweise unter Druck, wobei das erste Substrat mit dem zweiten Substrat unter einem Andruck gefügt wird und anschließend der Druck bei der thermischen Härtung aufrechterhalten wird.

Durch die Verwendung mindestens einer Verbindung mit mindestens einer Oxetan-Gruppe, insbesondere eines Hydroxyoxetans, kann erreicht werden, dass die Viskosität der Klebstoffzusammensetzung nach der Vorhärtung beim Erwärmen für die thermische Härtung nicht abfällt, wodurch das "Herausquetschen" der Klebstoffzusammensetzung minimiert bzw. gänzlich verhindert werden kann. Somit ist es insbesondere vorteilhaft, wenn die Viskosität der Klebstoffzusammensetzung nach der Vorhärtung durch Erwärmung nicht abfällt.

Schließlich betrifft die Erfindung auch noch das Produkt, welches mittels der hierin beschriebenen Klebstoffzusammensetzungen verklebt wurde bzw. welches gemäß dem beschriebenen Verfahren zum Verkleben von zwei Substraten hergestellt worden ist. Außerdem betrifft die Erfindung auch die Verwendung der hierin beschriebenen Zusammensetzungen zum Verkleben von mindestens zwei Substraten, bzw. Bauteilen, insbesondere gemäß dem beschriebenen Verfahren.

Alle im Zusammenhang mit den Klebstoffzusammensetzungen offenbarten Ausführungsformen sind in gleicher Weise auch auf die ausgehärteten Formulierungen sowie die beschriebenen Verfahren anwendbar und umgekehrt.

Im Folgenden wir die Erfindung durch Beispiele illustriert, ohne aber auf diese beschränkt zu sein.

### Beispiele

### Durchführung:

Die Zusammensetzungen wurden entsprechen der Tabelle 1 zusammengemischt und anschließend das Viskositätsverhalten während der UV Härtung und der anschließenden thermischen Härtung gemessen.

Die Viskosität wurde gemessen mittels Photorheologie bestimmt werden, wobei eine Plate-Plate-Konfiguration mit d = 15mm, ein Abstand von 0,1 mm und eine Quecksilberlampe als UV-Quelle verwendet wurde. Die Messung erfolgte mit einem Anton Paar MCR 302 mit einer Omnicure S2000 Quecksilberlampe.

**Tabelle 1: Zusammensetzungen (Mengenangaben in Gew.-%)**

| | V1 | E1 | E2 | E3 |
|---|---|---|---|---|
| Aromatisches Epoxidharz¹ | 62,42 | 59,92 | 57,42 | 54,92 |
| Epoxid-Novolac² | 29,94 | 29,94 | 29,94 | 29,94 |
| Reaktiv Verdünner³ | 6,41 | 6,41 | 6,41 | 6,41 |
| TMPO⁴ | - | 2,5 | 5 | 7,5 |
| UV-Härter⁵ | 1,23 | 1,23 | 1,23 | 1,23 |

| | | | | |
|---|---|---|---|---|
| E: Erfindungsgemäß; V: Vergleichsbeispiel 1: aromatisches Epoxidharz basierend auf einer Mischung von Bisphenol A Epoxidharz und Bisphenol F Epoxidharz; Epoxidäquivalentgewicht von 165 g/mol, Viskosität bei 25 °C von 2,5 Pas 2: Epoxid-Novolac basierend auf einem Reaktionsprodukt von Ephichlorhydrin mit einem Phenol-Formaldehyd Novolac mit einem Epoxidäquivalentgewicht von 178 g/mol, einer Viskosität bei 52°C von 35 Pas 3: Monoglycidylether von para-tert.-Butylphenol; Epoxidäquivalentgewicht von 220 g/mol 4: Trimethylolpropanoxetan 5: Mischung von Triarylsulfoniumhexafluoroantimonatsalzen | | | | |

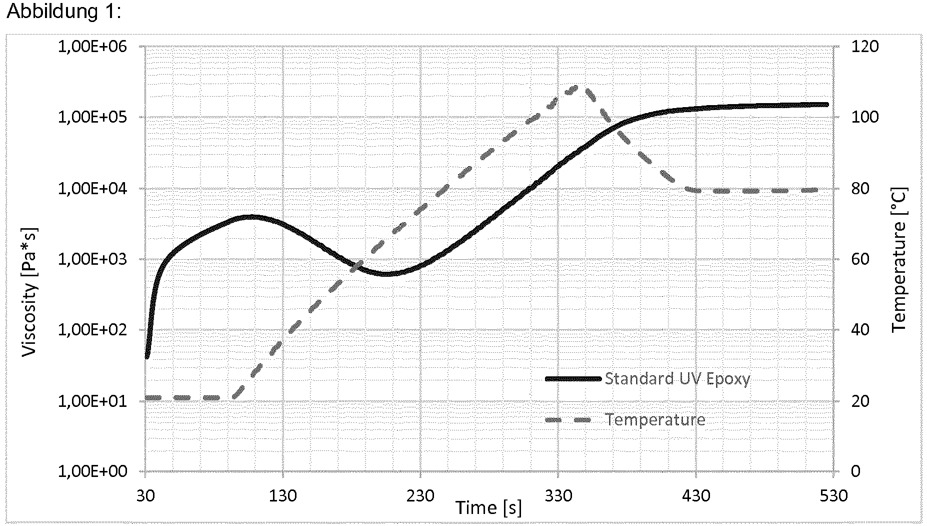

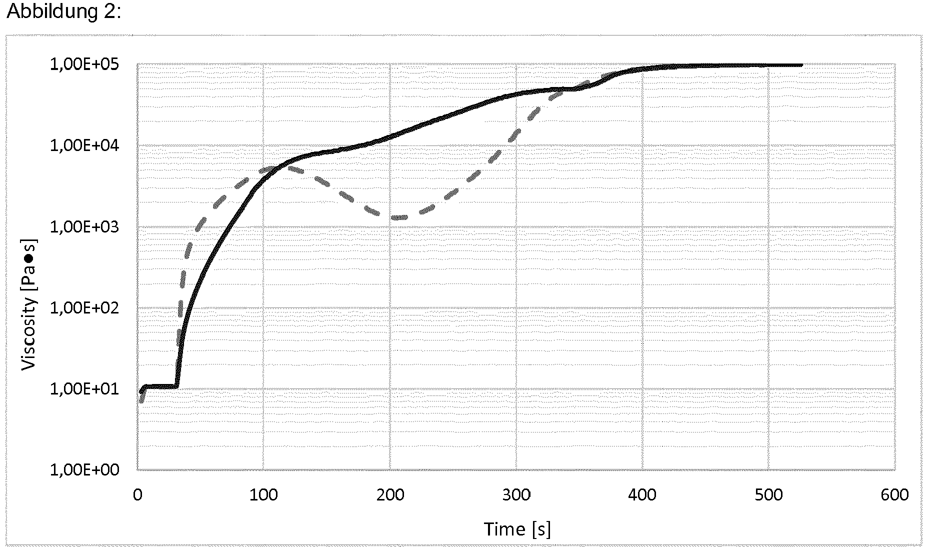

Die Abbildung 1 zeigt die Viskositätsentwicklung (durchgezogene Kurve) der Vergleichszusammensetzung V1 bezüglich der Zeit und Temperatur (gestrichelte Kurve). Während der anfänglichen UV Härtung steigt die Viskosität stark an. Bei der anschließenden Erwärmung für die thermische Härtung fällt die Viskosität anfänglich stark ab, bevor die einsetzende thermische Härtung wieder zu einem Viskositätsanstieg führt. Der Abfall der Viskosität zu Beginn der Erwärmung führt dazu, dass entsprechende Zusammensetzungen verlaufen, insbesondere wenn bei der thermischen Härtung innerhalb eines Siebdruckverfahrens zusätzlich Druck angewendet wird.

Abbildung 2 zeigt im Vergleich zu der Viskositätsentwicklung der Vergleichszusammensetzung V1 (gestrichelte Kurve) die Viskositätsentwicklung der Zusammensetzung E2 (durchgezogene Kurve). Es ist deutlich zu erkennen, dass im Falle der Zusammensetzung E2 die Viskosität beim Erwärmen nicht abfällt, sondern stetig ansteigt. Auch die anderen Zusammensetzungen E1 und E3 zeigen eine vergleichbare Entwicklung. Dadurch, dass die Viskosität nicht abfällt, bleiben diese Zusammensetzungen dimensionsstabil und verlaufen nicht ungewollt während der thermischen Härtung.

## Patentansprüche

1. Klebstoffzusammensetzung umfassend
(a) mindestens 50 Gew.-% mindestens eines aromatischen Epoxidharzes;
(b) mindestens eine Verbindung mit mindestens einer Oxetan-Gruppe; und
(c) mindestens einen Photoinitiator,
**dadurch gekennzeichnet, dass** die mindestens eine Verbindung mit mindestens einer Oxetan-Gruppe genau eine Oxetan-Gruppe pro Molekül aufweist und/oder die mindestens eine Verbindung mit mindestens einer Oxetan-Gruppe zusätzlich mindestens eine Hydroxylgruppe hat.

2. Klebstoffzusammensetzung nach Anspruch 1, **dadurch gekennzeichnet, dass** das mindestens eine aromatische Epoxidharz mindestens zwei Epoxidgruppen pro Molekül aufweist und/oder ausgewählt ist aus Epoxidharzen basierend auf Bisphenol oder Epoxidharzen basierend auf Novolak-Harzen, insbesondere Phenol-Formaldehyd-Harzen, oder aus Mischungen davon

3. Klebstoffzusammensetzung nach Anspruch 1 oder 2, **dadurch gekennzeichnet, dass** das mindestens eine aromatische Epoxidharz ein Epoxid-Äquivalent zwischen 130 und 1000 g/mol Äquivalent, insbesondere zwischen 140 und 500 g/mol Äquivalent, vorzugsweise zwischen 150 und 250 g/mol Äquivalent auf.

4. Klebstoffzusammensetzung nach einem der Ansprüche 1 bis 3, **dadurch gekennzeichnet, dass** die Klebstoffzusammensetzung mindestens zwei unterschiedliche aromatische Epoxidharze enthält, vorzugsweise eine Mischung von mindestens einem Epoxidharzen basierend auf Bisphenol, insbesondere Bisphenol A oder Bisphenol F oder Mischungen davon, und einem Epoxidharz basierend auf Novolak-Harzen, insbesondere Phenol-Formaldehyd-Harzen.

5. Klebstoffzusammensetzung nach einem der Ansprüche 1 bis 4, **dadurch gekennzeichnet, dass** die Klebstoffzusammensetzung mindestens eine Verbindung mit einer Oxetan-Gruppe gemäß der Formel (I) enthält: 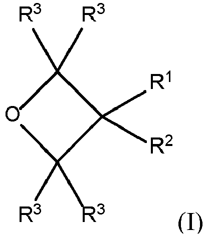 worin
R¹ für Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht, und
R² und R³ unabhängig voneinander jeweils für Wasserstoff, Alkyl, Alkoxy, Alkoxyalkyl, Aryloxyalkyl, Hydroxyalkyl, Hydroxyalkoxy, Hydroxyalkoxyalkyl, Aryl, Aryloxy, Hydroxyaryl oder Hydroxyaryloxy steht, insbesondere R² für Hydroxyalkyl, Hydroxyalkoxy, Hydroxyalkoxyalkyl, Hydroxyaryl oder Hydroxyaryloxy steht.

6. Klebstoffzusammensetzung nach einem der Ansprüche 1 bis 5, **dadurch gekennzeichnet, dass** die Klebstoffzusammensetzung als mindestens eine Verbindung mit einer Oxetan-Gruppe Hydroxyoxetan ausgewählt aus der Gruppe bestehend aus 3-Methyl-3-(hydroxymethyl)oxetan, 3-Ethyl-3-(hydroxymethyl)oxetan, 3,3-Di(hydroxymethyl)oxetan (Trimethylolpropanoxetan; TMPO) und Mischungen davon enthält.

7. Klebstoffzusammensetzung nach einem der Ansprüche 1 bis 6, **dadurch gekennzeichnet, dass** die Klebstoffzusammensetzung ferner einen Reaktivverdünner enthält.

8. Klebstoffzusammensetzung nach einem der Ansprüche 1 bis 7, **dadurch gekennzeichnet, dass** die Klebstoffzusammensetzung enthält:
(a) 50 bis 98 Gew.-%, insbesondere 60 bis 97 Gew.-%, besonders bevorzugt 70 bis 95 Gew.-% eines aromatisches Epoxidharzes;
(b) 1 bis 20 Gew.-%, vorzugsweise 2 bis 15 Gew.-%, insbesondere 5 bis 10 Gew.-%,mindestens eine Verbindung mit mindestens einer Oxetan-Gruppe, wobei die mindestens eine Verbindung mit mindestens einer Oxetan-Gruppe genau eine Oxetan-Gruppe pro Molekül aufweist und/oder die mindestens eine Verbindung mit mindestens einer Oxetan-Gruppe zusätzlich mindestens eine Hydroxylgruppe hat;
(c) 0,1 bis 5 Gew.-%, vorzugsweise 0,5 bis 3 Gew.-%, insbesondere 1 bis 2 Gew.-% mindestens eines Photoinitiators; und
(d) optional bis zu 20 Gew.-%, vorzugsweise 1 bis 15 Gew.-%, insbesondere 2 bis 10 Gew.-% mindestens eines Reaktivverdünners, insbesondere mit genau einer Epoxidgruppe pro Molekül.

9. Verfahren zum Verkleben von mindestens zwei Substraten, wobei nach dem Auftragen einer Klebstoffzusammensetzung gemäß einem der Ansprüche 1 bis 8 auf ein erstes zu verklebendes Substrat die Klebstoffzusammensetzung mit Strahlung vorgehärtet und anschließen das Substrat mit einem zweiten Substrat gefügt und thermisch gehärtet wird.

10. Verfahren zum Verkleben nach Anspruch 9, **dadurch gekennzeichnet, dass** Verfahren mittels Siebdruckverfahren erfolgt.

11. Verfahren zum Verkleben nach Anspruch 9 oder 10, **dadurch gekennzeichnet, dass** die Klebstoffzusammensetzung vor dem Auftragen eine Viskosität bei 25°C von kleiner 100 Pas, insbesondere von 0,01 bis 100 Pas, vorzugsweise von 0,1 bis 50 Pas, bevorzugt von 1 bis 20 Pas aufweist und/oder die Klebstoffzusammensetzung nach der Vorhärtung eine Viskosität bei 25 °C von größer 1000 Pas, insbesondere von 1000 bis 50000 Pas, vorzugsweise von 2000 bis 20000 Pas, bevorzugt von 3000 bis 10000 Pas aufweist, wobei die Viskosität wie in der Beschreibung angegeben bestimmt ist.

12. Verfahren zum Verkleben nach einem der Ansprüche 9 bis 11, **dadurch gekennzeichnet, dass** die Viskosität der Klebstoffzusammensetzung nach der Vorhärtung beim Erwärmen für die thermische Härtung nicht abfällt.

13. Produkt, welches mittels einer Klebstoffzusammensetzung gemäß einem der Ansprüche 1 bis 8 verklebt wurde bzw. welches mittels einem Verfahren zum Verkleben von mindestens zwei Substraten gemäß der Ansprüche 9 bis 12 hergestellt worden ist.

14. Verwendung einer Klebstoffzusammensetzung gemäß einem der Ansprüche 1 bis 8 zum Verkleben von mindestens zwei Substraten, insbesondere in Verfahren zum Verkleben von mindestens zwei Substraten gemäß der Ansprüche 10 bis 12.

## Claims

1. An adhesive composition comprising:
(a) at least 50 wt.% of at least one aromatic epoxy resin;
(b) at least one compound having at least one oxetane group; and
(c) at least one photoinitiator,
**characterized in that** the at least one compound having at least one oxetane group has exactly one oxetane group per molecule and/or the at least one compound having at least one oxetane group additionally has at least one hydroxyl group.

2. The adhesive composition according to claim 1, **characterized in that** the at least one aromatic epoxy resin has at least two epoxy groups per molecule and/or is selected from epoxy resins based on bisphenol or epoxy resins based on novolak resins, in particular phenol-formaldehyde resins, or from mixtures thereof.

3. The adhesive composition according to claim 1 or claim 2,
**characterized in that** the at least one aromatic epoxy resin has an epoxy equivalent between 130 and 1000 g/mol equivalent, in particular between 140 and 500 g/mol equivalent, preferably between 150 and 250 g/mol equivalent.

4. The adhesive composition according to one of claims 1 to 3,
**characterized in that** the adhesive composition contains at least two different aromatic epoxy resins, preferably a mixture of at least one epoxy resin based on bisphenol, in particular bisphenol A or bisphenol F or mixtures thereof, and of an epoxy resin based on novolak resins, in particular phenol-formaldehyde resins.

5. The adhesive composition according to one of claims 1 to 4,
**characterized in that** the adhesive composition contains at least one compound having an oxetane group according to formula (I): 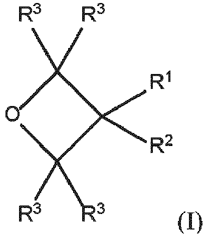 where
R¹ represents alkyl, alkoxy, alkoxyalkyl, aryloxyalkyl, hydroxyalkyl, hydroxyalkoxy, hydroxyalkoxyalkyl, aryl, aryloxy, hydroxyaryl or hydroxyaryloxy, and R² and R³ each independently represent hydrogen, alkyl, alkoxy, alkoxyalkyl, aryloxyalkyl, hydroxyalkyl, hydroxyalkoxy, hydroxyalkoxyalkyl, aryl, aryloxy, hydroxyaryl or hydroxyaryloxy, in particular R² represents hydroxyalkyl, hydroxyalkoxy, hydroxyalkoxyalkyl, hydroxyaryl or hydroxyaryloxy.

6. The adhesive composition according to one of claims 1 to 5,
**characterized in that** the adhesive composition contains, as at least one compound having an oxetane group, hydroxyoxetane selected from the group consisting of 3-methyl-3-(hydroxymethyl)oxetane, 3-ethyl-3-(hydroxymethyl)oxetane, 3,3-di(hydroxymethyl)oxetane (trimethylolpropane oxetane; TMPO) and mixtures thereof.

7. The adhesive composition according to one of claims 1 to 6,
**characterized in that** the adhesive composition further contains a reactive diluent.

8. The adhesive composition according to one of claims 1 to 7,
**characterized in that** the composition contains:
(a) 50 to 98 wt.%, in particular 60 to 97 wt.%, particularly preferably 70 to 95 wt.% of an aromatic epoxy resin;
(b) 1 to 20 wt.%, preferably 2 to 15 wt.%, in particular 5 to 10 wt.% of at least one compound having at least one oxetane group, wherein the at least one compound having at least one oxetane group has exactly one oxetane group per molecule, and/or the at least one compound having at least one oxetane group additionally has at least one hydroxyl group;
(c) 0.1 to 5 wt.%, preferably 0.5 to 3 wt.%, in particular 1 to 2 wt.% of at least one photoinhibitor; and
(d) optionally up to 20 wt.%, preferably 1 to 15 wt.%, in particular 2 to 10 wt.% of at least one reactive diluent, in particular having exactly one epoxy group per molecule.

9. A method for bonding at least two substrates, wherein after applying an adhesive composition according to one of claims 1 to 8 to a first substrate to be bonded, the adhesive composition is pre-cured by radiation and then the substrate is joined to a second substrate and thermally cured.

10. The method for bonding according to claim 9, **characterized in that** the method is carried out by a screen printing process.

11. The method for bonding according to claim 9 or claim 10,
**characterized in that** before application, the adhesive composition has a viscosity at 25°C of less than 100 Pas, in particular from 0.01 to 100 Pas, preferably from 0.1 to 50 Pas, preferably from 1 to 20 Pas, and/or after pre-curing, the adhesive composition has a viscosity at 25°C of greater than 1000 Pas, in particular from 1000 to 50000 Pas, preferably from 2000 to 20000 Pas, preferably from 3000 to 10000 Pas, wherein the viscosity is determined as stated in the description.

12. The method for bonding according to one of claims 9 to 11,
**characterized in that** after pre-curing, the viscosity of the adhesive composition does not drop when heated for thermal curing.

13. A product which has been bonded by means of an adhesive composition according to one of claims 1 to 8 or which has been produced by means of a method for bonding at least two substrates according to claims 9 to 12.

14. Use of an adhesive composition according to one of claims 1 to 8 for bonding at least two substrates, in particular in the method for bonding at least two substrates according to claims 10 to 12.

## Revendications

1. Composition adhésive comprenant
(a) au moins 50 % en poids d'au moins une résine époxy aromatique ;
(b) au moins un composé comportant au moins un groupe oxétane ; et
(c) au moins un photoinitiateur,
**caractérisée en ce que** l'au moins un composé comportant au moins un groupe oxétane présente exactement un groupe oxétane par molécule et/ou l'au moins un composé comportant au moins un groupe oxétane possède en outre au moins un groupe hydroxyle.

2. Composition adhésive selon la revendication 1, **caractérisée en ce que** l'au moins une résine époxy aromatique présente au moins deux groupes époxy par molécule et/ou est choisie parmi des résines époxy à base de bisphénol ou des résines époxy à base de résines novolaque, en particulier de résines phénol-formaldéhyde, ou des mélanges de celles-ci.

3. Composition adhésive selon la revendication 1 ou 2, **caractérisée en ce que** l'au moins une résine époxy aromatique un équivalent époxy compris entre 130 et 1 000 g/mol d'équivalent, en particulier entre 140 et 500 g/mol d'équivalent, de préférence entre 150 et 250 g/mol d'équivalent.

4. Composition adhésive selon l'une des revendications 1 à 3,
**caractérisée en ce que** la composition adhésive contient au moins deux résines époxy aromatiques différentes, de préférence un mélange d'au moins une résine époxy à base de bisphénol, en particulier de bisphénol A ou de bisphénol F ou de mélanges de ceux-ci, et d'une résine époxy à base de résines novolaque, en particulier de résines phénol-formaldéhyde.

5. Composition adhésive selon l'une des revendications 1 à 4,
**caractérisée en ce que** la composition adhésive contient au moins un composé comportant un groupe oxétane conformément à la formule (I) : 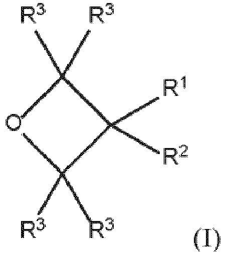 où
R¹ représente alkyle, alcoxy, alcoxyalkyle, aryloxyalkyle, hydroxyalkyle, hydroxyalcoxy, hydroxyalcoxyalkyle, aryle, aryloxy, hydroxyaryle ou hydroxyaryloxy, et R² et R³ représentent indépendamment l'un de l'autre respectivement hydrogène, alkyle, alcoxy, alcoxyalkyle, aryloxyalkyle, hydroxyalkyle, hydroxyalcoxy, hydroxyalcoxyalkyle, aryle, aryloxy, hydroxyaryle ou hydroxyaryloxy, en particulier R² représente hydroxyalkyle, hydroxyalcoxy, hydroxyalcoxyalkyle, hydroxyaryle ou hydroxyaryloxy.

6. Composition adhésive selon l'une des revendications 1 à 5,
**caractérisée en ce que** la composition adhésive contient, en tant qu'au moins un composé comportant un groupe oxétane, de l'hydroxyoxétane choisi dans le groupe constitué de 3-méthyl-3-(hydroxyméthyl)oxétane, 3-éthyl-3-(hydroxyméthyl)oxétane, 3,3-di(hydroxyméthyl)oxétane (triméthylolpropane oxétane ; TMPO) et des mélanges de ceux-ci.

7. Composition adhésive selon l'une des revendications 1 à 6,
**caractérisée en ce que** la composition adhésive contient en outre un diluant réactif.

8. Composition adhésive selon l'une des revendications 1 à 7,
**caractérisée en ce que** la composition adhésive contient :
(a) 50 à 98 % en poids, en particulier 60 à 97 % en poids, de manière particulièrement préférée 70 à 95 % en poids, d'une résine époxy aromatique ;
(b) 1 à 20 % en poids, de préférence 2 à 15 % en poids, en particulier 5 à 10 % en poids, d'au moins un composé comportant au moins un groupe oxétane, dans laquelle l'au moins un composé comportant au moins un groupe oxétane présente exactement un groupe oxétane par molécule et/ou l'au moins un composé comportant au moins un groupe oxétane possède en outre au moins un groupe hydroxyle ;
(c) 0,1 à 5 % en poids, de préférence 0,5 à 3 % en poids, en particulier 1 à 2 % en poids, d'au moins un photoinitiateur ; et
(d) éventuellement jusqu'à 20 % en poids, de préférence 1 à 15 % en poids, en particulier 2 à 10 % en poids, d'au moins un diluant réactif, en particulier comportant exactement un groupe époxy par molécule.

9. Procédé pour le collage d'au moins deux substrats, dans lequel, après l'application d'une composition adhésive conformément à l'une des revendications 1 à 8 sur un premier substrat à coller, la composition adhésive est prédurcie par rayonnement, puis le substrat est assemblé avec un second substrat et durci thermiquement.

10. Procédé pour le collage selon la revendication 9, **caractérisé en ce que** le procédé est effectué au moyen d'un procédé par sérigraphie.

11. Procédé pour le collage selon la revendication 9 ou 10,
**caractérisé en ce que** la composition adhésive présente, avant l'application, une viscosité à 25 °C inférieure à 100 Pas, en particulier allant de 0,01 à 100 Pas, de préférence de 0,1 à 50 Pas, préférablement de 1 à 20 Pas, et/ou la composition adhésive présente, après le prédurcissement, une viscosité à 25 °C supérieure à 1 000 Pas, en particulier allant de 1 000 à 50 000 Pas, de préférence de 2 000 à 20 000 Pas, préférablement de 3 000 à 10 000 Pas, dans lequel la viscosité est déterminée comme indiqué dans la description.

12. Procédé pour le collage selon l'une des revendications 9 à 11,
**caractérisé en ce que** la viscosité de la composition adhésive après le prédurcissement ne diminue pas lors du chauffage pour le durcissement thermique.

13. Produit, lequel a été collé au moyen d'une composition adhésive conformément à l'une des revendications 1 à 8 ou lequel a été fabriqué au moyen d'un procédé pour le collage d'au moins deux substrats conformément aux revendications 9 à 12.

14. Utilisation d'une composition adhésive conformément à l'une des revendications 1 à 8 pour le collage d'au moins deux substrats, en particulier dans des procédés pour le collage d'au moins deux substrats conformément aux revendications 10 à 12.
